# EUROPEAN PATENT APPLICATION

(11) **EP 4 020 649 A1**
(43) Date of publication of application: **29.06.2022**
(21) Application number: 20858621.4
(22) Date of filing: 17.06.2020
(51) Int. Cl.: H01M 10/052, H01M 10/0562, H01M 10/0585

(54) **SOLID-STATE BATTERY**

(30) Priority: 23.08.2019 JP 2019152618
(71) Applicant: Murata Manufacturing Co., Ltd., Nagaokakyo-shi, Kyoto 617-8555 (JP)
(72) Inventor: YOSHIOKA, Makoto, Nagaokakyo-shi, Kyoto 617-8555 (JP)
(74) Representative: Reeve, Nicholas Edward
(86) International application number: PCT/JP2020/023731
(87) International publication number: WO 2021/039043

(57) **Abstract**

The present invention provides a solid-state battery capable of suppressing deterioration of battery characteristics when corners or ridges of an electrode stacked body are chipped. The solid-state battery of the present invention includes an electrode stacked body including a plurality of electrode layers formed by alternately stacking two electrode layers: a positive electrode layer and a negative electrode layer with a solid electrolyte layer interposed therebetween. In a sectional viewing mode of the electrode stacked body, at least one of both end surfaces of each of the electrode layers is spaced from an end surface of the electrode stacked body and has a clearance from the end surface of the electrode stacked body, and a clearance of each of the electrode layers included in an upper portion and a lower portion in a stacking direction of the electrode stacked body is larger than a clearance of each of the electrode layers included in a central portion in the stacking direction of the electrode stacked body.

## Description

### TECHNICAL FIELD

The present invention relates to a solid-state battery.

### BACKGROUND ART

In recent years, demand for batteries as power sources for portable electronic devices such as mobile phones and portable personal computers has increased significantly. In batteries used for such purposes, an electrolyte (electrolytic solution) such as an organic solvent has been used as a medium for moving ions. However, in the battery having the above configuration, there is a risk that the electrolytic solution may leak. Further, the organic solvent and the like used in the electrolytic solution are combustible substances. Therefore, it is desired to improve the safety of the battery.

In order to improve the safety of the battery, research on a solid-state battery using a solid electrolyte as an electrolyte instead of an electrolytic solution is in progress.

The solid-state battery is produced, for example, by forming a positive electrode layer green sheet, a negative electrode layer green sheet, and a solid electrolyte layer green sheet, alternately stacking the positive electrode layer green sheet and the negative electrode layer green sheet with the solid electrolyte green sheet interposed therebetween, further stacking the solid electrolyte layer green sheet on both upper and lower surfaces to form an electrode stacked body, firing the electrode stacked body, chamfering corners of the electrode stacked body by polishing, then forming extraction terminals on the electrode stacked body, and further providing a protective layer on the electrode stacked body, if necessary (e.g., Patent Document 1).

### PRIOR ART DOCUMENT

### PATENT DOCUMENTS

Patent Document 1: Japanese Patent Application Laid-Open No. 2016-1602

### SUMMARY OF THE INVENTION

### Problem to be solved by the invention

However, when chamfering the corners of the electrode stacked body by polishing or the like at the time of production, or when conveying the electrode stacked body, the corners or ridges of the electrode stacked body may be chipped. For example, the present inventors have found that when the corners of the electrode stacked body are chipped, the upper portion and lower portion electrode layers of the electrode stacked body in the vicinity of the corners are exposed on the surface of the electrode stacked body and react with moisture in the air, whereby the battery characteristics may be deteriorated.

On the other hand, it is also possible to prevent the corners and ridges of the electrode stacked body from being chipped at the time of producing or mounting by reviewing the material constituting the electrode stacked body. However, such a method can increase production costs. Consequently, there is a need for a method in which conventional materials can be employed.

Therefore, an object of the present invention is to provide a solid-state battery capable of suppressing deterioration of battery characteristics when corners or ridges of an electrode stacked body are chipped.

### Means for solving the problem

In order to solve the above problems, a solid-state battery according to one aspect of the present invention includes an electrode stacked body including a plurality of electrode layers formed by alternately stacking two electrode layers: a positive electrode layer and a negative electrode layer with a solid electrolyte layer interposed therebetween, in which, in a sectional viewing mode of the electrode stacked body, at least one of both end surfaces of each of the electrode layers is spaced from an end surface of the electrode stacked body and has a clearance from the end surface of the electrode stacked body, and a clearance of each of the electrode layers included in an upper portion and a lower portion in a stacking direction of the electrode stacked body is larger than a clearance of each of the electrode layers included in a central portion in the stacking direction of the electrode stacked body.

### Advantageous effect of the invention

According to the present invention, it is possible to provide a solid-state battery capable of suppressing deterioration of battery characteristics when the corners or ridges of the electrode stacked body are chipped.

### BRIEF EXPLANATION OF DRAWINGS

FIG. 1A is a schematic sectional view illustrating a structure of an electrode stacked body 100 constituting a solid-state battery according to one aspect of the present invention.
FIG. 1B is a schematic sectional view illustrating a cross section taken along a line B-B' in FIG. 1A.
FIG. 1C is a schematic cross-sectional view illustrating a cross section taken along a line C-C' in FIG. 1A.
FIG. 2 is a schematic sectional view illustrating a structure of an electrode stacked body 200 constituting a solid-state battery according to another aspect of the present invention.

### MODE FOR CARRYING OUT THE INVENTION

Hereinafter, embodiments of the present invention will be described with reference to the drawings or the like.

A solid-state battery according to an embodiment of the present invention includes an electrode stacked body including a plurality of electrode layers formed by alternately stacking two electrode layers: a positive electrode layer and a negative electrode layer with a solid electrolyte layer interposed therebetween, in which, in a sectional viewing mode of the electrode stacked body, at least one of both end surfaces of each of the electrode layers is spaced from an end surface of the electrode stacked body and has a clearance from the end surface of the electrode stacked body, and a clearance of each of the electrode layers included in an upper portion and a lower portion in a stacking direction of the electrode stacked body is larger than a clearance of each of the electrode layers included in a central portion in the stacking direction of the electrode stacked body.

The term "solid-state battery" as used herein refers in a broad sense to a battery in which its components (particularly an electrolyte layer) are constituted of solids, and refers in a narrow sense to an "all-solid-state battery" in which its components (particularly all the components) are constituted of solids. The term "solid-state battery" as used herein includes what is called a "secondary battery" capable of repeating charging and discharging, and a "primary battery" capable of discharging only. The "solid-state battery" is preferably the "secondary battery". The term "secondary battery" is not excessively limited by its name, and can include, for example, "an electricity storage device".

The term "planar viewing mode" used herein refers to a state (top view or bottom view) when an object is viewed from the upper side or the lower side along the thickness direction based on a stacking direction T of the electrode stacked body constituting the solid-state battery. The term "sectional viewing mode" used herein refers to a sectional state (sectional view) when viewed from a direction substantially perpendicular to the thickness direction based on the stacking direction T of the electrode stacked body constituting the solid-state battery. The terms "vertical direction" and "horizontal direction" used directly or indirectly herein respectively correspond to the vertical direction and the horizontal direction in the drawings. Unless otherwise specified, the same reference symbols or symbols shall denote the same members and portions or the same semantic contents. In a preferred aspect, it can be considered that a vertical downward direction (i.e., the direction in which gravity acts) corresponds to a "downward direction" and the opposite direction corresponds to an "upward direction". Further, the term "corner of the electrode stacked body" used herein indicates a portion where three surfaces of the electrode stacked body adjacent to one another intersect, and the term "ridge of the electrode stacked body" indicates a portion where two adjacent surfaces of the electrode stacked body intersect.

### (Electrode Stacked Body)

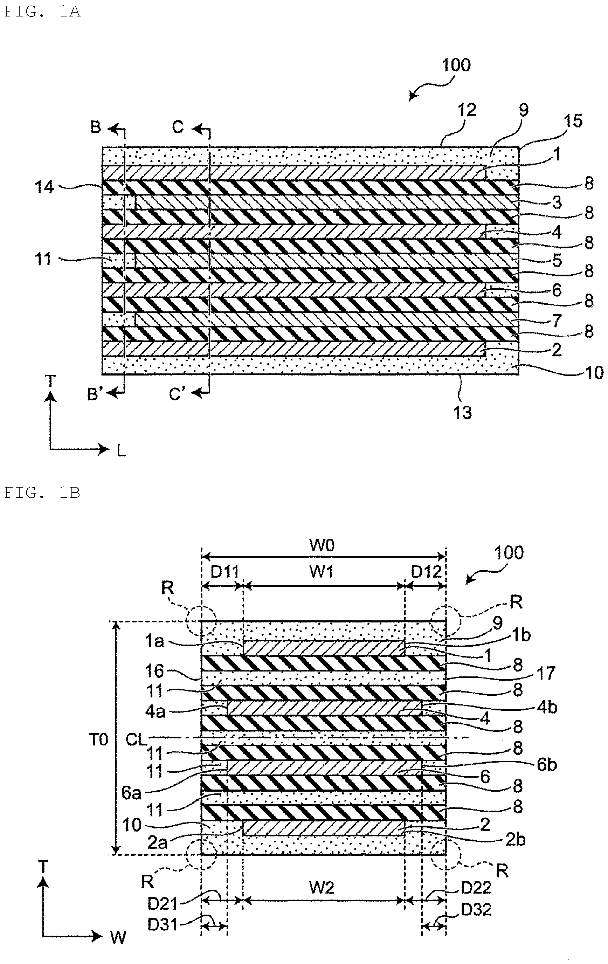

FIG. 1A is a schematic sectional view illustrating a structure of the electrode stacked body 100 constituting the solid-state battery according to one aspect, and is a schematic sectional view based on a sectional view in a length direction L orthogonal to the stacking direction T of the electrode stacked body 100. The electrode stacked body includes a plurality of electrode layers in which two different-polar electrode layers: a positive electrode layer and a negative electrode layer (referred to as "first electrode layer" and "second electrode layer", respectively) are alternately stacked with a solid electrolyte layer interposed therebetween, and includes at least one unit structure including a first electrode layer, a solid electrolyte layer, and a second electrode layer (also referred to as "single battery"). In FIG. 1A, the electrode stacked body 100 has a rectangular cross section, has an upper surface 12 and a bottom surface 13 facing each other in the stacking direction T, and has a pair of end surfaces 14 and 15 facing each other in the length direction L. Further, the electrode stacked body 100 has a plurality of first electrode layers 1, 2, 4, and 6 and a plurality of second electrode layers 3, 5, and 7, and has a structure in which each of the first electrode layers and each of the second electrode layers are alternately stacked with a solid electrolyte layer 8 interposed therebetween. The first electrode layers 1, 2, 4, and 6 and the second electrode layers 3, 5, and 7 are extended in opposite directions, one end surface of the first electrode layers 1, 2, 4, and 6 is exposed on one end surface 14 of the electrode stacked body 100, and one end surface of the second electrode layers 3, 5, and 7 is exposed on another end surface 15 of the electrode stacked body 100. The extended first electrode layers and second electrode layers are connected to extraction terminals (not illustrated) provided on the end surfaces 14 and 15, respectively. Further, an upper insulating layer 9 is provided on the upper surface of the first electrode layer 1 as the uppermost layer of the plurality of electrode layers, and a lower insulating layer 10 is provided on the bottom surface of the first electrode layer 2 as the lowermost layer of the plurality of electrode layers. Furthermore, an intermediate insulating layer 11 is provided between the unexposed end surfaces of the first electrode layer and the second electrode layer and the end surfaces 14 and 15 of the electrode stacked body 100.

FIG. 1B is a schematic sectional view illustrating a cross section taken along a line B-B' in FIG. 1A, which is a schematic sectional view based on a sectional viewing mode in the width direction W orthogonal to the stacking direction T and the length direction L of the electrode stacked body 100, and shows a sectional view in the vicinity of the corners of the electrode stacked body 100. In FIG. 1B, among the first electrode layers and the second electrode layers, the first electrode layers 1, 2, 4, and 6 are exposed. Each of both widthwise end surfaces of each of the first electrode layers 1, 2, 4, and 6 is spaced from the widthwise end surface 16 or 17 of the electrode stacked body 100, the widthwise end surfaces 16 and 17 facing each other. Specifically, a widthwise end surface 1a of the first electrode layer 1 is spaced by a clearance D₁₁ from the widthwise end surface 16 of the electrode stacked body 100, the widthwise end surface 16 facing the widthwise end surface 1a, and a widthwise end surface 1b of the first electrode layer 1 is spaced by a clearance D₁₂ from the widthwise end surface 17 of the electrode stacked body 100, the widthwise end surface 17 facing the widthwise end surface 1b. Further, a widthwise end surface 2a of the first electrode layer 2 is spaced by a clearance D₂₁ from the widthwise end surface 16 of the electrode stacked body 100, the widthwise end surface 16 facing the widthwise end surface 2a, and a widthwise end surface 2b of the first electrode layer 2 is spaced by a clearance D₂₂ from the widthwise end surface 17 of the electrode stacked body 100, the widthwise end surface 17 facing the widthwise end surface 2b. Further, a widthwise end surface 4a of the first electrode layer 4 is spaced by a clearance D₃₁ from the widthwise end surface 16 of the electrode stacked body 100, the widthwise end surface 16 facing the widthwise end surface 4a, and a widthwise end surface 4b of the first electrode layer 4 is spaced by a clearance D₃₂ from the widthwise end surface 17 of the electrode stacked body 100, the widthwise end surface 17 facing the widthwise end surface 4b. Further, a widthwise end surface 6a of the first electrode layer 6 is spaced by the same clearance D₃₁ as the first electrode 4 from the widthwise end surface 16 of the electrode stacked body 100, the widthwise end surface 16 facing the widthwise end surface 6a, and a widthwise end surface 6b of the first electrode layer 6 is spaced by the same clearance D₃₂ as the first electrode 4 from the widthwise end surface 17 of the electrode stacked body 100, the widthwise end surface 17 facing the widthwise end surface 6b. Here, the clearances D₁₁ and D₁₂ of the first electrode layer 1 included in the upper portion in the stacking direction of the electrode stacked body 100 and the clearances D₂₁ and D₂₂ of the first electrode layer 2 included in the lower portion in the stacking direction are larger than the clearances D₃₁ and D₃₂ of the first electrode layer 4 and the clearances D₃₁ and D₃₂ of the first electrode layer 6 included in the central portion in the stacking direction of the electrode stacked body 100. That is, the clearance at the side of the end surface 16 of the electrode stacked body 100 satisfies the relationship of (D₁₁, D₂₁) > (D₃₁), and the clearance at the side of the end surface 17 of the electrode stacked body 100 satisfies the relationship of (D₁₂, D₂₂) > (D₃₂). As long as the relationships are satisfied, D₁₁ and D₂₁ may be equal or different, and D₁₂ and D₂₂ may be equal or different. As long as the relationships are satisfied, D₁₁ and D₁₂ may be equal or different, and D₂₁ and D₂₂ may be equal or different. Further, FIG. 1B illustrates an example in which the first electrode layer 4 and the first electrode layer 6 have equal clearances D₃₁ and D₃₂, and the clearances of the first electrode layer 4 and the first electrode layer 6 may be different as long as the above relationships are satisfied. Further, the values of the clearances (D₃₁, D₃₂) of the first electrode layers 4 and 6 can be 60% or more and 90% or less, preferably 80% or more and 90% or less of the clearances (D₁₁, D₁₂, D₂₁, D₂₂) of the first electrode layers 1 and 2. In addition, the values of the clearances (D₁₁, D₁₂, D₂₁, D₂₂) of the first electrode layers 1 and 2 can be set so that the width W1 of the first electrode layer 1 and the width W2 of the first electrode layer 2 are 50% or more and 90% or less, preferably 70% or more and 90% or less with respect to the width W0 of the electrode stacked body 100. Here, the central portion of the electrode stacked body 100 is a region including a virtual central line CL drawn in a direction orthogonal to the stacking direction of the electrode stacked body 100, the region has a thickness of about 1/3 of a thickness T0 of the electrode stacked body 100, and the first electrode layers 4 and 6 are included in FIG. 1B. The upper portion of the electrode stacked body 100 is a region including the uppermost layer of the plurality of electrode layers, and the region has a thickness of about 1/3 of the thickness T0 of the electrode stacked body 100 and includes the first electrode layer 1 in FIG. 1B. The lower portion of the electrode stacked body 100 is a region including the lowermost layer of the plurality of electrode layers, and the region has a thickness of about 1/3 of the thickness T0 of the electrode stacked body 100 and includes the first electrode layer 2 in FIG. 1B.

In a conventional solid-state battery in which electrode layers included in an upper portion, a central portion, and a lower portion of an electrode stacked body have an equal clearance, when the corners of the electrode stacked body are chipped, the electrode layers included in the upper portion and the lower portion in the vicinity of the corners are exposed on the surface and react with moisture in the air, as a result of which battery characteristics may be deteriorated. However, in the present invention, the clearance of each of the electrode layers included in the upper portion and the lower portion is larger than the clearance of each of the electrode layers included in the central portion, so that it is possible to increase a distance between a corner R and each of the widthwise end surfaces 1a and 1b of the first electrode layer 1 and a distance between a corner R and each of the widthwise end surfaces 2a and 2b of the first electrode layer 2. Accordingly, when the corners R of the electrode stacked body 100 are chipped, it is possible to prevent the widthwise end surfaces 1a and 1b of the first electrode layer 1 and the widthwise end surfaces 2a and 2b of the first electrode layer 2 from being directly exposed on the surface of the electrode stacked body 100.

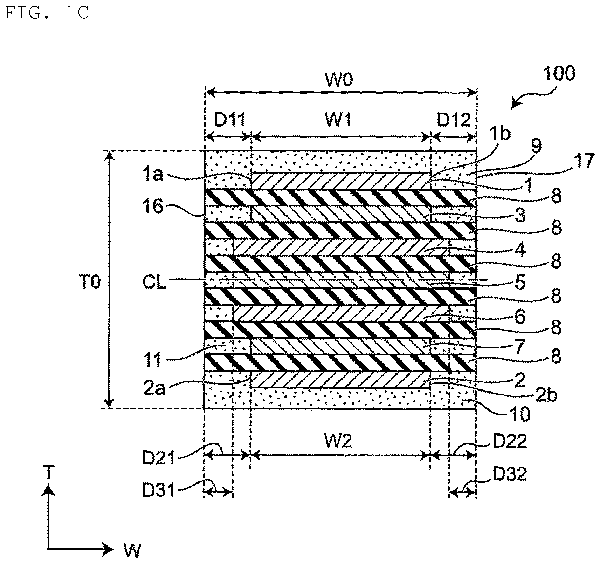

On the other hand, FIG. 1C is a schematic sectional view illustrating a cross section taken along a line C-C' in FIG. 1A, which is a schematic sectional view based on a sectional viewing mode in the width direction W, and is a sectional view of a region away from the corners of the electrode stacked body 100. In FIG. 1C, the first electrode layers 1, 2, 4, and 6 and the second electrode layers 3, 5, and 7 are exposed. Each of both widthwise end surfaces of each of the first electrode layers 1, 2, 4, and 6 and both widthwise end surfaces of each of the second electrode layers 3, 5, and 7 is spaced from the widthwise end surface 16 or 17 of the electrode stacked body 100, the widthwise end surfaces 16 and 17 facing each other. The first electrode layer 1 and the second electrode layer 3 are included in the upper portion of the electrode stacked body 100, and the first electrode layer 1 is an uppermost electrode layer. Further, the first electrode layers 4 and 6 and the second electrode layer 5 are included in the central portion of the electrode stacked body 100. Furthermore, the first electrode layer 2 and the second electrode layer 7 are included in the lower portion of the electrode stacked body 100, and the first electrode layer 2 is a lowermost electrode layer. Here, the first electrode layer 1 and the second electrode layer 3 included in the upper portion of the electrode stacked body 100 in the stacking direction have equal clearances D₁₁ and D₁₂, and the first electrode layer 2 and the second electrode layer 7 included in the lower portion have equal clearances D₂₁ and D₂₂. Further, the first electrode layers 4 and 6 and the second electrode layer 5 included in the central portion have equal clearances D₃₁ and D₃₂. The clearances D₁₁ and D₁₂ of the first electrode layer 1 and the second electrode layer 3 included in the upper portion and the clearances D₂₁ and D₂₂. of the first electrode layer 2 and the second electrode layer 7 included in the lower portion are larger than the clearances D₃₁ and D₃₂. of the first electrode layers 4 and 6 and the second electrode layer 5 included in the central portion. That is, the clearance at the side of the end surface 16 of the electrode stacked body 100 satisfies the relationship of (D₁₁, D₂₁) > (D₃₁), and the clearance at the side of the end surface 17 of the electrode stacked body 100 satisfies the relationship of (D₁₂, D₂₂) > (D₃₂). Similarly to the case of FIG. 1B, the values of the clearances (D₃₁, D₃₂) of the first electrode layers 4 and 6 can be 60% or more and 90% or less, preferably 80% or more and 90% or less of the clearances (D₁₁, D₁₂, D₂₁, D₂₂) of the first electrode layers 1 and 2. In addition, the values of the clearances (D₁₁, D₁₂, D₂₁, D₂₂) of the first electrode layers 1 and 2 can be set so that the width W1 of the first electrode layer 1 and the width W2 of the first electrode layer 2 are 50% or more and 90% or less, preferably 70% or more and 90% or less with respect to the width W0 of the electrode stacked body 100.

As illustrated in FIG. 1C, the clearance of each of the electrode layers included in the upper portion and the lower portion is larger than the clearance of each of the electrode layers included in the central portion, so that it is possible to increase a distance between a ridge (not illustrated) and each of the widthwise end surfaces 1a and 1b of the first electrode layer 1 and a distance between a ridge and each of the widthwise end surfaces 2a and 2b of the first electrode layer 2. Accordingly, when the ridges of the electrode stacked body 100 are chipped, it is possible to prevent the widthwise end surfaces 1a and 1b of the first electrode layer 1 in the upper portion and the widthwise end surfaces 2a and 2b of the first electrode layer 2 in the lower portion from being directly exposed on the surface of the electrode stacked body 100. This makes it possible to suppress deterioration of the characteristics of the solid-state battery due to reaction of the electrode layer with moisture in the air.

FIG. 1C illustrates an example in which the clearances of the plurality of electrode layers included in the upper portion are equal, but the clearances of the plurality of electrode layers may be different from one another. However, in this case, the clearance of the uppermost electrode layer is preferably larger than the clearances of the other electrode layers included in the upper portion. FIG. 1C illustrates an example in which the clearances of the plurality of electrode layers included in the lower portion are equal, but the clearances of the plurality of electrode layers may be different from one another. However, in this case, the clearance of the lowermost electrode layer is preferably larger than the clearances of the other electrode layers included in the lower portion. The clearances of the uppermost electrode layer and the lowermost electrode layer are larger than the clearances of the other electrode layer included in the upper portion and the other electrode layer included in the lower portion, so that a distance between each of the uppermost layer and the lowermost layer closest to the corners of the electrode stacked body and a corner of the electrode stacked body can be further increased. Consequently, it is possible to prevent the electrode layers in the upper portion and the lower portion from being exposed on the surface of the electrode stacked body.

In addition, the clearances of the two electrode layers: the uppermost layer and the lowermost layer may be larger than the clearances of all the other electrode layers except the uppermost layer and the lowermost layer. A distance between each of the uppermost layer and the lowermost layer closest to the corners of the electrode stacked body and a corner of the electrode stacked body is increased in order to prevent the electrode layers in the upper portion and the lower portion from being exposed on the surface of the electrode stacked body. Further, it is necessary that the clearances of all the other electrode layers except the uppermost layer and the lowermost layer are smaller than the clearances of the uppermost electrode layer and the lowermost electrode layer, and thus the tolerance for the accuracy of the width dimension can be increased. Accordingly, the printing of the electrode becomes easy, the required amount of electrode can be reduced, and the production costs can be reduced.

FIG. 1 illustrates an example in which the clearances of the plurality of electrode layers included in the central portion are equal, but the clearances of the plurality of electrode layers included in the central portion may be different as long as the clearances are smaller than the clearances of the electrode layers included in the lower portion and the upper portion.

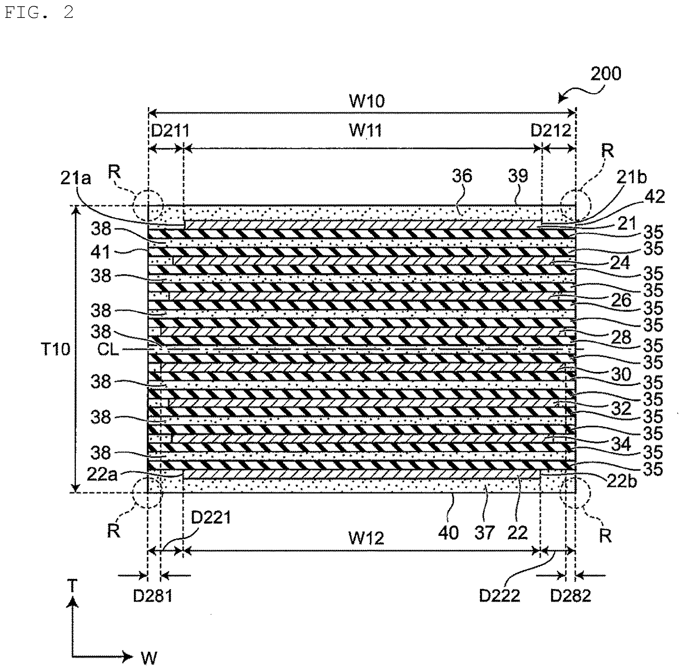

FIG. 2 is a schematic sectional view illustrating a structure of the electrode stacked body 200 constituting a solid-state battery according to another aspect, which is a schematic sectional view based on a sectional viewing mode in the width direction W orthogonal to the stacking direction T and the length direction L of the electrode stacked body 200, and shows a sectional view in the vicinity of corners of the electrode stacked body 200. FIG. 2 illustrates an aspect in which the clearances of the two electrode layers: the uppermost layer and the lowermost layer among the plurality of electrode layers are larger than the clearances of all the other electrode layers except the uppermost layer and the lowermost layer, and the clearances of the electrode layers gradually increase from a central electrode layer in the central portion toward each of the uppermost layer and the lowermost layer.

The electrode stacked body 200 has an upper surface 39 and a bottom surface 40 facing each other in the stacking direction T, and has a pair of widthwise end surfaces 41 and 42 facing each other in the width direction W. Each of the first electrode layers and each of the second electrode layers are alternately stacked with a solid electrolyte layer 35 interposed therebetween. In FIG. 2, among the first and second electrode layers, the first electrode layers 21, 22, 24, 26, 28, 30, 32, and 34 are exposed. Each of both widthwise end surfaces of each of the first electrode layers 21, 22, 24, 26, 28, 30, 32, and 34 is spaced from the widthwise end surface 41 or 42 of the electrode stacked body 200. Further, an upper insulating layer 36 is provided on the upper surface of the first electrode layer 21 as the uppermost layer of the plurality of electrode layers, and a lower insulating layer 37 is provided on the bottom surface of the first electrode layer 22 as the lowermost layer of the plurality of electrode layers. Furthermore, intermediate insulating layers 38 are provided between the unexposed end surfaces of the first electrode layer and the second electrode layer and between the end surfaces 41 and 42 of the electrode stacked body 200.

Here, the central portion of the electrode stacked body 200 is a region including a virtual central line CL drawn in a direction orthogonal to the stacking direction of the electrode stacked body 200, and the region has a thickness of about 1/3 of a thickness T10 of the electrode stacked body 200 and includes the first electrode layers 28 and 30 in FIG. 2. The upper portion of the electrode stacked body 200 is a region including the uppermost layer of the plurality of electrode layers, and the region has a thickness of about 1/3 of the thickness T10 of the electrode stacked body 200 and includes the first electrode layers 21, 24, and 26 in FIG. 2. The lower portion of the electrode stacked body 200 is a region including the lowermost layer of the plurality of electrode layers, and the region has a thickness of about 1/3 of the thickness T10 of the electrode stacked body 200 and includes the first electrode layers 22, 32, and 34 in FIG. 2. Further, the term "central electrode layer in the central portion" indicates one electrode layer located on the virtual central line CL in a case where an odd number of electrode layers are included in the central portion, and indicates two electrode layers located across the virtual central line CL in a case where an even number of electrode layers are included in the central portion. In FIG. 2, the central electrode layers in the central portion are the first electrode layers 28 and 30. In the aspect illustrated in FIG. 2, clearances of the uppermost electrode layer 21 and the lowermost electrode layer 22 among the plurality of electrode layers are larger than clearances of all the other electrode layers 24, 26, 28, 30, 32, and 34 except the uppermost layer and the lowermost layer, and the clearances of the electrode layers gradually increase from the central electrode layers 28 and 30 in the central portion toward each of the uppermost layer and the lowermost layer. Further, the values of the clearances (D₂₈₁, D₂₈₂) of the first electrode layers 28 and 30 can be 60% or more and 90% or less, preferably 80% or more and 90% or less of the clearances (D₂₁₁ D₂₁₂, D₂₂₁, D₂₂₂) of the first electrode layers 21 and 22. In addition, the values of the clearances of the first electrode layers 21 and 22 can be set so that the width W11 of the first electrode layer 21 and the width W12 of the first electrode layer 22 are 50% or more and 90% or less, preferably 70% or more and 90% or less with respect to the width W10 of the electrode stacked body 100. Although FIG. 2 illustrates an example in which the clearances of the first electrode layer 21 and the first electrode layer 22 are equal, the clearances of the first electrode layer 21 and the first electrode layer 22 may be different as long as the above-described relationship in which the clearances of the electrode layers gradually increase from the central electrode layers 28 and 30 in the central portion toward each of the uppermost layer and the lowermost layer is satisfied. That is, D₂₁₁ and D₂₂₁ may be different from each other, and D₂₁₂ and D₂₂₂ may also be different from each other.

According to the aspect illustrated in FIG. 2, similarly to the aspect illustrated in FIG. 1B, when the corners R of the electrode stacked body 200 are chipped, it is possible to prevent a widthwise end surface 21a and a widthwise end surface 21b of the first electrode layer 21 as the uppermost layers and a widthwise end surface 22a and a widthwise end surface 22b of the first electrode layer 22 as the lowermost layers from being directly exposed to the air. This makes it possible to suppress deterioration of the characteristics of the solid-state battery due to reaction of the electrode layer with moisture in the air. Further, according to the aspect illustrated in FIG. 2, in the sectional viewing mode in the width direction of the electrode stacked body, the clearances of the electrode layers gradually increase from the central electrode layers 28 and 30 in the central portion toward each of the uppermost layer and the lowermost layer. Thus, the plurality of electrode layers has a curved structure that is curved so as to bulge toward both end surfaces of the electrode stacked body. This makes it possible to alleviate thermal stress generated in the electrode stacked body at the time of energization, and to suppress deterioration of characteristics of the solid-state battery. The fact that the clearances of the electrode layers gradually increase from the central electrode layer(s) in the central portion toward each of the uppermost layer and the lowermost layer means that the clearances of the electrode layers continuously increase. For example, the clearances of the electrode layers from the central electrode layer(s) toward the uppermost layer or the lowermost layer are all different, and the clearances of the electrode layers gradually increase from the central electrode layer(s) toward the uppermost layer or the lowermost layer.

In the aspects illustrated in FIGS. 1A to 1C and FIG. 2, a positive electrode layer may be used for the first electrode layer, and a negative electrode layer may be used for the second electrode layer. Alternatively, a negative electrode layer may be used for the first electrode layer, and a positive electrode layer may be used for the second electrode layer. Both the positive electrode layer and the negative electrode layer may be used for the uppermost layer and the lowermost layer, and it is preferable to use the positive electrode layer. This is because a battery is used since the negative electrode layer receives lithium contained in the positive electrode layer (charge reaction), and at this time, the larger the negative electrode layer is, the more efficiently lithium moving from the positive electrode can be received.

The sizes of the first electrode layer and the second electrode layer are usually determined by the capacity ratio between the positive electrode layer and the negative electrode layer. Therefore, when the clearances of the electrode layers included in the upper portion and the lower portion are made larger than the clearances of the electrode layers included in the central portion, it is preferable to increase the thicknesses of the electrode layers included in the upper portion and the lower portion from the viewpoint of securing the capacity ratio.

In addition, both widthwise end surfaces of the first electrode layer and the second electrode layer preferably have a tapered shape in which the thicknesses decrease toward the widthwise end surfaces of the electrode stacked body, the widthwise end surfaces facing each other, in the sectional viewing mode in the width direction of the electrode stacked body. The widthwise end surfaces are formed into a tapered shape, so that it is possible to further increase a distance between a corner of the electrode stacked body and each of both widthwise end surfaces of the first electrode layer or the second electrode layer. Accordingly, when the corners of the electrode stacked body are chipped, it is possible to prevent the first electrode layer and the second electrode layer from being exposed on the surface of the electrode stacked body.

FIGS. 1A to 1C illustrate examples in which the number of electrode layers constituting the electrode stacked body is 7, and FIG. 2 illustrates an example in which the number of electrode layers constituting the electrode stacked body is 15, but the number of electrode layers is not particularly limited as long as it is plural.

The solid-state battery of the present invention may have any shape in a plan view, and usually has a rectangular shape. The rectangular shape includes squares and rectangles.

FIGS. 1A to 1C and 2 illustrate only the structure of the electrode stacked body constituting the solid-state battery, but extraction terminals for extracting the positive electrode layer and the negative electrode layer and a protective layer for protecting the electrode stacked body can be provided, if necessary.

FIGS. 1A to 1C and 2 illustrate an aspect in which both widthwise end surfaces of the electrode layer are spaced from the end surface of the electrode stacked body, and the present invention also includes an aspect in which only one of both the widthwise end surfaces of the electrode layer is spaced from the end surface of the electrode stacked body. In such aspects, it is possible to provide a solid-state battery capable of suppressing deterioration of battery characteristics when the corners or ridges of the electrode stacked body are chipped.

FIGS. 1A to 1C and 2 illustrate an aspect in which extraction terminals are provided on a pair of facing end surfaces in the length direction L of the electrode stacked body 100, and both widthwise end surfaces of the electrode layer are spaced from the widthwise end surfaces of the electrode stacked body 100, in a sectional viewing mode in the width direction W orthogonal to the stacking direction T of the electrode stacked body. The present invention also includes another aspect in which extraction terminals are provided on a pair of facing end surfaces in the width direction W of the electrode stacked body 100, and both lengthwise end surfaces of the electrode layer are spaced from the lengthwise end surfaces of the electrode stacked body 100, in a sectional viewing mode in the length direction L orthogonal to the stacking direction T of the electrode stacked body. Also in this aspect, one of both the lengthwise end surfaces of the electrode layer may be spaced from the lengthwise end surface of the electrode stacked body. When the size in the length direction is the same as the size in the width direction, like a cube, both the sectional viewing mode in the length direction and the sectional viewing mode in the width direction may be used.

### (Positive Electrode Layer and Negative Electrode Layer)

The positive electrode layer is made of a sintered body of positive electrode active material particles. The positive electrode active material particles may be constituted of a sintered body containing positive electrode active material particles, electron conductive material particles, and solid electrolyte particles contained in the solid electrolyte layer.

The negative electrode layer is made of a sintered body of negative electrode active material particles. The negative electrode active material particles may be constituted of a sintered body containing positive electrode active material particles, electron conductive material particles, and solid electrolyte particles contained in the solid electrolyte layer 3.

The positive electrode active material contained in the positive electrode layer and the negative electrode active material contained in the negative electrode layer are substances involved in exchange of electrons in the solid-state battery, and ions contained in a solid electrolyte material constituting the solid electrolyte layer move (being conducted) between the positive electrode and the negative electrode and exchange electrons, thereby performing charging and discharging. It is preferable that the positive and negative electrode layers are particularly layers capable of occluding and releasing lithium ions. That is, the solid-state battery according to the present invention is preferably a solid-state secondary battery in which lithium ions move between the positive electrode and the negative electrode through the solid electrolyte layer to charge and discharge the battery.

The positive electrode active material contained in the positive electrode layer is not particularly limited, and examples thereof include at least one selected from the group consisting of a lithium-containing phosphoric acid compound having a NASICON-type structure, a lithium-containing phosphate compound having an olivine-type structure, a lithium-containing layered oxide, a lithium-containing oxide having a spinel-type structure, and the like. One example of the lithium-containing phosphate compound having a NASICON-type structure includes Li₃V₂(PO₄)₃. One example of the lithium-containing phosphate compound having an olivine-type structure includes Li₃Fe₂(PO₄)₃ and LiMnPO₄. One example of the lithium-containing layered oxide includes LiCoO₂ and LiCo_{1/3}Ni_{1/3}Mn_{1/3}O₂. One example of the lithium-containing oxide having a spinel-type structure includes LiMn₂O₄ and LiNi_{0.5}Mn₁.₅O₄.

The negative electrode active material contained in the negative electrode layer is not particularly limited, and examples thereof include at least one selected from the group consisting of an oxide containing at least one element selected from the group consisting of Ti, Si, Sn, Cr, Fe, Nb, and Mo, a graphite-lithium compound, a lithium alloy, a lithium-containing phosphate compound having a NASICON-type structure, a lithium-containing phosphate compound having an olivine-type structure, a lithium-containing oxide having a spinel-type structure, and the like. One example of the lithium alloy includes Li-Al. One example of the lithium-containing phosphate compound having a NASICON-type structure includes Li₃V₂(PO₄)₃. One example of the lithium-containing phosphate compound having an olivine-type structure includes Li₃Fe₂(PO₄)₃. One example of the lithium-containing oxide having a spinel-type structure includes Li₄Ti₅O₁₂.

The electron conductive material contained in the positive electrode layer and the negative electrode layer is not particularly limited, and examples thereof include metal materials such as silver, palladium, gold, platinum, aluminum, copper, or nickel; and carbon materials. Particularly, carbon is preferable because carbon does not easily react with the positive electrode active material, the negative electrode active material, and the solid electrolyte material, and is effective in reducing internal resistance of the solid-state battery.

The solid electrolyte material contained in the positive electrode layer and the negative electrode layer may be selected from, for example, materials similar to solid electrolyte materials that can be contained in the solid electrolyte layer to be described later.

The positive electrode layer and the negative electrode layer may each independently contain a sintering additive. The sintering additive is not particularly limited, and may be, for example, at least one selected from the group consisting of lithium oxide, sodium oxide, potassium oxide, boron oxide, silicon oxide, bismuth oxide, and phosphorus oxide.

The thicknesses of the positive electrode layer and the negative electrode layer are not particularly limited, and may each be, for example, 2 µm or more and 50 µm or less, particularly 5 µm or more and 30 µm or less, independently of each other.

### (Solid Electrolyte Layer)

The solid electrolyte layer is made of a sintered body of solid electrolyte particles. The material of the solid electrolyte particles (i.e., a solid electrolyte material) is not particularly limited as long as it can provide ions that can move between the positive electrode layer and the negative electrode layer. Examples of the solid electrolyte material include a lithium-containing phosphate compound having a NASICON structure, an oxide having a perovskite structure, and an oxide having a garnet-type or garnet-like structure. Examples of the lithium-containing phosphate compound having a NASICON structure include LiₓM_{y}(PO₄)₃ (1 ≤ x ≤ 2, 1 ≤ y ≤ 2, M is at least one selected from the group consisting of Ti, Ge, Al, Ga, and Zr). One example of the lithium-containing phosphate compound having a NASICON structure includes Li_{1.2}Al_{0.2}Ti_{1.8}(PO₄)₃. One example of the oxide having a perovskite structure includes La_{0.55}Li_{0.35}TiO₃. One example of the oxide having a garnet-type or garnet-like structure includes Li₇La₃Zr₂O₁₂.

The solid electrolyte layer may contain a sintering additive. The sintering additive contained in the solid electrolyte layer may be selected from, for example, materials similar to sintering additives that can be contained in the positive electrode layer and the negative electrode layer.

The thickness of the solid electrolyte layer is not particularly limited, and may be, for example, 1 µm or more and 15 µm or less, particularly 1 µm or more and 5 µm or less.

### (Insulating Layer)

As illustrated in FIGS. 1A to 1C and 2, an insulating layer is formed on the upper surface of the uppermost electrode layer, the bottom surface of the lowermost electrode layer, or between the widthwise end surface of the electrode layer and the widthwise end surface of the electrode stacked body. As the material of the insulating layer, a solid electrolyte or an insulating material may be used. As the solid electrolyte used for the insulating layer, a material for the solid electrolyte layer may be used. Examples of the insulating material include glass and ceramics. Examples of the glass include quartz glass (SiO₂), and composite oxide-based glass that is a combination of SiO₂ and one selected from at least one of PbO, B₂O₃, MgO, ZnO, Bi₂O₃, Na₂O, and Al₂O₃. Examples of ceramics include alumina, cordierite, mullite, steatite, forsterite, and various spinel compounds. The insulating layer 4 may be made of one or more materials selected from the group consisting of these substances. The insulating layer 4 may contain a material having electron conductivity (e.g., metal) as long as a battery element 100 is not shortcircuited. When the insulating layer 4 contains a material having electron conductivity, the content ratio of the electron conductive material may be, for example, 1% by volume or less. Since the insulating layer 4 contains an electron conductive material (e.g., metal), the heat generated by battery reaction can be smoothly released to the outside.

Hereinafter, a method of producing the solid-state battery of the present invention will be described.

The solid-state battery of the present invention can be produced by a printing method such as a screen printing method, a green sheet method using a green sheet, or a composite method thereof. Hereinafter, the case where the printing method is employed will be described in detail, but the method is not limited to this method.

The method of producing the solid-state battery according to the present invention includes at least: a step of forming an unfired electrode stacked body by a printing method, and a step of firing the unfired electrode stacked body.

### (Step of Forming Unfired Electrode Stacked Body)

In this step, an unfired electrode stacked body having a predetermined structure is formed on a substrate by a printing method using several types of pastes such as a positive electrode layer paste, a negative electrode layer paste, a solid electrolyte layer paste, and an insulating layer paste as ink.

The paste can be produced by wet-mixing a predetermined constituent material for each layer, selected from the group consisting of a positive electrode active material, a negative electrode active material, an electron conductive material, a solid electrolyte material, an insulating substance, and a sintering additive, with an organic vehicle obtained by dissolving an organic material in a solvent. For example, the positive electrode layer paste contains a positive electrode active material, an electron conductive material, a solid electrolyte material, an organic material, and a solvent. The negative electrode layer paste contains a negative electrode active material, an electron conductive material, a solid electrolyte material, an organic material, and a solvent. The solid electrolyte layer paste contains a solid electrolyte material, a sintering additive, an organic material, and a solvent. The insulating layer paste contains a solid electrolyte material or an insulating substance, an organic material, and a solvent.

The organic material contained in the paste is not particularly limited, and a polymer compound such as a polyvinyl acetal resin, a cellulose resin, a polyacrylic resin, a polyurethane resin, a polyvinyl acetate resin, or a polyvinyl alcohol resin may be used. The solvent is not particularly limited as long as the organic material can be dissolved, and for example, toluene, ethanol, and the like may be used.

In the wet mixing, a medium may be used, and specifically, a ball mill method, a viscomill method, or the like may be used. On the other hand, a wet mixing method that does not use a medium may be used, and a sand mill method, a high-pressure homogenizer method, a kneader dispersion method, or the like may be used.

The substrate is not particularly limited as long as it can support the unfired electrode stacked body, and for example, a polymer material such as polyethylene terephthalate may be used. Note that when the unfired electrode stacked body is subjected to a firing step while being held on the substrate, the substrate used is one having heat resistance to firing temperature.

At the time of printing, print layers are sequentially stacked with predetermined thicknesses and pattern shapes, and an unfired electrode stacked body corresponding to a predetermined solid-state battery structure is formed on the substrate, and then a drying treatment (i.e., a solvent evaporation treatment) is performed. In the present invention, the print layer is formed such that the clearances of the electrode layers included in the upper portion and the lower portion in the stacking direction of the electrode stacked body are larger than the clearances of the electrode layers included in the central portion in the stacking direction of the electrode stacked body.

After forming the unfired electrode stacked body, the unfired electrode stacked body may be peeled off from the substrate and subjected to a firing step, or the unfired electrode stacked body may be subjected to a firing step while being held on the substrate.

### (Firing Step)

The unfired electrode stacked body is subjected to firing. The firing is carried out by removing the organic material in a nitrogen gas atmosphere containing oxygen gas, for example, at 500°C, and then heating in a nitrogen gas atmosphere, for example, at 550°C to 1000°C. The firing may be usually performed while pressurizing the unfired electrode stacked body in the stacking direction L (the stacking direction L and the direction M perpendicular to the stacking direction L in some cases). The pressing force is not particularly limited, and may be, for example, 1 kg/cm² or more and 1000 kg/cm² or less, particularly 5 kg/cm² or more and 500 kg/cm² or less.

Further, a solid-state battery is completed by providing extraction terminals and, if necessary, a protective layer on the fired electrode stacked body.

### INDUSTRIAL APPLICABILITY

The solid-state battery according to the present invention may be used in various fields in which electricity storage is expected. The solid-state battery according to the present invention can be used, although merely examples, for electric, information, communication fields where mobile devices are used (e.g., fields of mobile devices such as mobile phones, smart phones, smart watches, laptop computers and digital cameras, activity meters, arm computers, electronic paper, wireless earbuds, and wearable devices), home and small industrial applications (e.g., fields of power tools, golf carts, and domestic, nursing, and industrial robots), large industrial applications (e.g., fields of forklifts, elevators, gantry cranes), transportation system fields (e.g., fields of electric vehicles such as hybrid cars, electric cars, buses, trains, power assisted bicycles, and electric motorcycles), power system applications (e.g., fields of various power generations, road conditioners, smart grids, general household power storage systems, and the like), medical applications (medical equipment fields such as earphone hearing aids), pharmaceutical applications (fields such as dose management systems), and IoT fields, space and deep sea applications (e.g., fields of space probes, submersible research vehicles, and the like), and the like.

### DESCRIPTION OF REFERENCE SYMBOLS

1, 2, 4, 6: First electrode layer
1a, 1b: Widthwise end surface of uppermost layer
2a, 2b: Widthwise end surface of lowermost layer
4a, 4b: Widthwise end surface of central portion
6a, 6b: Widthwise end surface of central portion
3, 5, 7: Second electrode layer
8: Solid electrolyte layer
9: Upper insulating layer
10: Lower insulating layer
11: Intermediate insulating layer
12: Upper surface of electrode stacked body
13: Bottom surface of electrode stacked body
14, 15: Lengthwise end surface of electrode stacked body
16, 17: Widthwise end surface of electrode stacked body
21, 22, 24: First electrode layer
21a, 21b: Widthwise end surface of uppermost layer
22a, 22b: Widthwise end surface of lowermost layer
26, 28, 30: First electrode layer
32, 34: First electrode layer
35: Solid electrolyte layer
36: Upper insulating layer
37: Lower insulating layer
38: Intermediate insulating layer
39: Upper surface of electrode stacked body
40: Bottom surface of electrode stacked body
41, 42: Widthwise end surface of electrode stacked body
100, 200: Electrode stacked body

## Claims

1. A solid-state battery comprising an electrode stacked body including a plurality of electrode layers formed by alternately stacking two electrode layers: a positive electrode layer and a negative electrode layer with a solid electrolyte layer interposed therebetween,
wherein, in a sectional viewing mode of the electrode stacked body, at least one of both end surfaces of each of the electrode layers is spaced from an end surface of the electrode stacked body and has a clearance from the end surface of the electrode stacked body, and
a clearance of each of the electrode layers included in an upper portion and a lower portion in a stacking direction of the electrode stacked body is larger than a clearance of each of the electrode layers included in a central portion in the stacking direction of the electrode stacked body.

2. The solid-state battery according to claim 1, wherein an uppermost electrode layer and another electrode layer are included in the upper portion in the stacking direction, a lowermost electrode layer and another electrode layer are included in the lower portion in the stacking direction, and clearances of the uppermost electrode layer and the lowermost electrode layer are larger than clearances of the other electrode layer included in the upper portion and the other electrode layer included in the lower portion.

3. The solid-state battery according to claim 1 or 2, wherein an uppermost electrode layer is included in the upper portion in the stacking direction, a lowermost electrode layer is included in the lower portion in the stacking direction, and clearances of the electrode layers gradually increase from a central electrode layer in the central portion toward each of the uppermost layer and the lowermost layer in the stacking direction of the electrode stacked body.

4. The solid-state battery according to any one of claims 1 to 3, wherein an uppermost electrode layer is included in the upper portion in the stacking direction, a lowermost electrode layer is included in the lower portion in the stacking direction, and clearances of the uppermost electrode layer and the lowermost electrode layer are larger than clearances of all electrode layers other than the uppermost electrode layer and the lowermost electrode layer.

5. The solid-state battery according to any one of claims 1 to 4, wherein the uppermost layer and the lowermost layer are positive electrode layers.

6. A mobile device comprising the solid-state battery according to any one of claims 1 to 5.

7. An electric vehicle comprising the solid-state battery according to any one of claims 1 to 5.
